# EUROPEAN PATENT APPLICATION

(11) **EP 1 386 779 A1**
(43) Date of publication of application: **04.02.2004**
(21) Application number: 03425275.9
(22) Date of filing: 30.04.2003
(51) Int. Cl.: B60N 3/10, B60N 2/46

(54) **Extractable glass-holder for seat, particularly for seat of economy class in an aircraft**

(30) Priority: 02.08.2002 IT RM20020139 U
(71) Applicant: AVIOINTERIORS S.P.A., I-04013 Tor Tre Ponti Latina (IT)
(72) Inventor: Veneruso, Alberto, 04013 Tor Tre Ponti (LT) (IT)
(74) Representative: Iannone, Carlo Luigi

(57) **Abstract**

The invention relates to an extractable glass-holder (3) for seat (1), particularly for seat (1) of economy class in an aircraft, said glass-holder (3) being housed within the seat armrest (2), and being extractable from the same, an extraction mechanism (5) of the glass-holder (3) from the same armrest (2) being provided, said glass-holder (3) being comprised of a rigid arm (7), longitudinally movable with respect to the armrest (2), in such a way to be able to take a retracted position and an extracted use position, and of a movable arm, or finger (9), pivoted on said rigid arm (7), in such a way to take a closed position when said glass-holder (3) is in the retracted position within the armrest (2), and an open position, when said glass-holder (3) is in the extracted position, said rigid (7) and movable (9) arms having, in the use configuration, a shape such to allow to support the glass.

## Description

The present invention relates to an extractable glass-holder for seat, particularly for seat of economy class in an aircraft.

More specifically, the invention concerns a glass-holder of above kind realised in such a way to be able to be housed also within the limited space of a narrow armrest, and to be extracted from the same with the predisposition of receiving a glass for its support in safety conditions.

In the following the specification will be directed in particular to a glass-holder to be used for an aircraft seat, for economy class, but it is evident that it cannot be used to limit the scope of the invention, since the same solution can be adopted also for other kind of seats, such as those for trains.

As it is well known, when realising the travelling seats, manufacturers aim to give to the passenger an always better comfort, always remaining limited by the respect of the available space.

Particularly, in the economic class seats, at present it does not exist the same possibility of the business class seats to build in a glass holding tray into the armrest, since the length of the armrest is really reduced, and thus it is not possible to house therein a glass-holder having such dimensions to house a glass of the type usually used for the travelling service.

At present, the only solution available in economic class to place a glass is that of putting the same on the little table provided on the back of the front seat or, for those seats in first row, within the same armrest.

It is obviously a not practical solution, particularly for the dimensions of the table, and the discomfort deriving from keeping it open.

On the other side, it is necessary to be able to have at disposal an element upon which resting the glass between the delivery of the drink and the withdrawal of the used glass.

The optimum solution would be that of providing within the seat armrest a glass-support, i.e. a table having reduced dimensions to rest the glass, as it occurs in the business class seats, said solution not being possible due to the insufficiency of the space provided in the seat armrest, not allowing to house it when not used.

In this situation, it is provided the solution according to the present invention, providing a glass-holder realised in such a way to be able to be housed also within the armrest of an economic class seat, and when extracted from the same, having dimensions sufficient to support a standard glass.

It is therefore specific object of the present invention an extractable glass-holder for seat, particularly for seat of economy class in an aircraft, said glass-holder being housed within the seat armrest, and being extractable from the same, an extraction mechanism of the glass-holder from the same armrest being provided, said glass-holder being comprised of a rigid arm, longitudinally movable with respect to the armrest, in such a way to be able to take a retracted position and an extracted use position, and of a movable arm, or finger, pivoted on said rigid arm, in such a way to take a closed position when said glass-holder is in the retracted position within the armrest, and an open position, when said glass-holder is in the extracted position, said rigid and movable arms having, in the use configuration, a shape such to allow to support the glass.

Preferably, according to the invention, said extraction mechanism provides a thrusting element for the extraction of the rigid arm of the glass-holder.

Always according to the invention, said rigid arm has an inner shaped part to conform with the shape of the glass to be supported.

Furthermore, according to the invention, said movable arm, or finger, has a curved shape, corresponding to the outer shape of the glass.

Still according to the invention, a glass-holder protection door is provided on said armrest, at the front of the glass-holder.

The present invention will be now described, for illustrative but not limitative purposes, according to its preferred embodiments, with particular reference to the figures of the enclosed drawings, wherein:

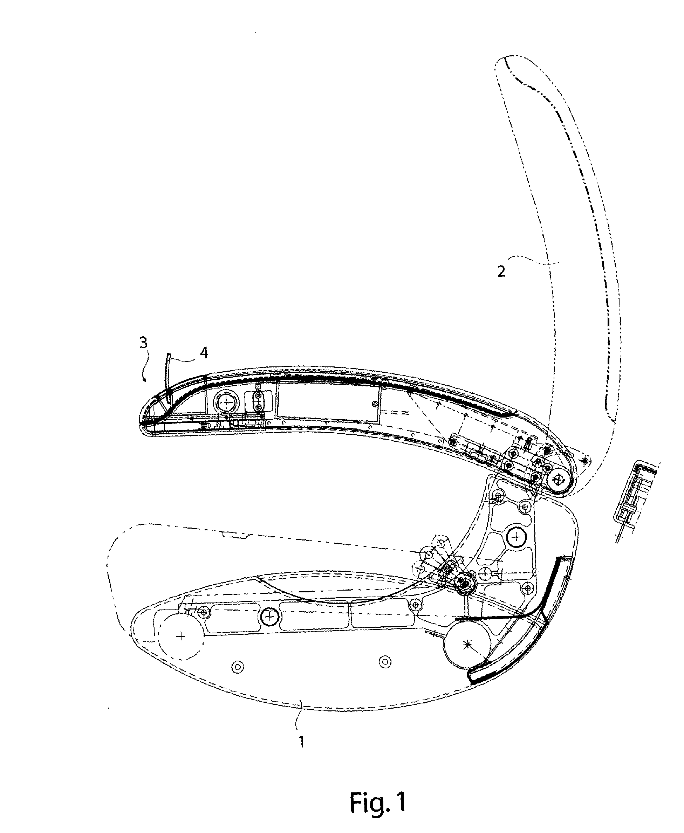

figure 1 is a schematic view of a aircraft seat armrest for economic class with a glass-holder as by the present invention;
figure 2 shows the glass-holder according to the invention in a rest position;
figures 3, 3a and 3b respectively show the glass-holder according to the invention in the extraction position and the advancement mechanism of the same glass-holder; and
figure 4 shows an element of the glass-holder according to the invention removed from the same armrest.

Observing now all the figures of the enclosed drawings, it is shown an aircraft seat for economy class, generically indicated by reference number 1, providing an overturning armrest 2, within which a glass-holder according to the invention is housed, said glass-holder being generically indicated by reference number 3.

At the front of the armrest 2, in correspondence of the glass-holder 3, a door 4 is provided, that must be lifted up before being possible extracting the glass-holder 3 housed within the armrest 2, and protecting the same when it must not be used.

Within the armrest 2 a mechanism is provided, generically indicated by reference number 5, provided with a snapping element 6, tending to bring the glass-holder 3 forward when it is extracted.

Said glass-holder 3 is comprised of a arm 7, wherein a semicircular seat 8 is realised, coupling with the outer portion of the glass (not shown), and an element, or finger, 9, pivoted on said arm, where indicated by the reference number 10, said element 9 too being slightly curved, in such a way to conform to the outer portion of the glass.

Finger 9, when the glass-holder 3 according to the invention is housed within the arm, closes, rotating about the pin 10, toward the arm 7, thus reducing the horizontal dimension of the glass-holder, allowing its introduction within the armrest 2.

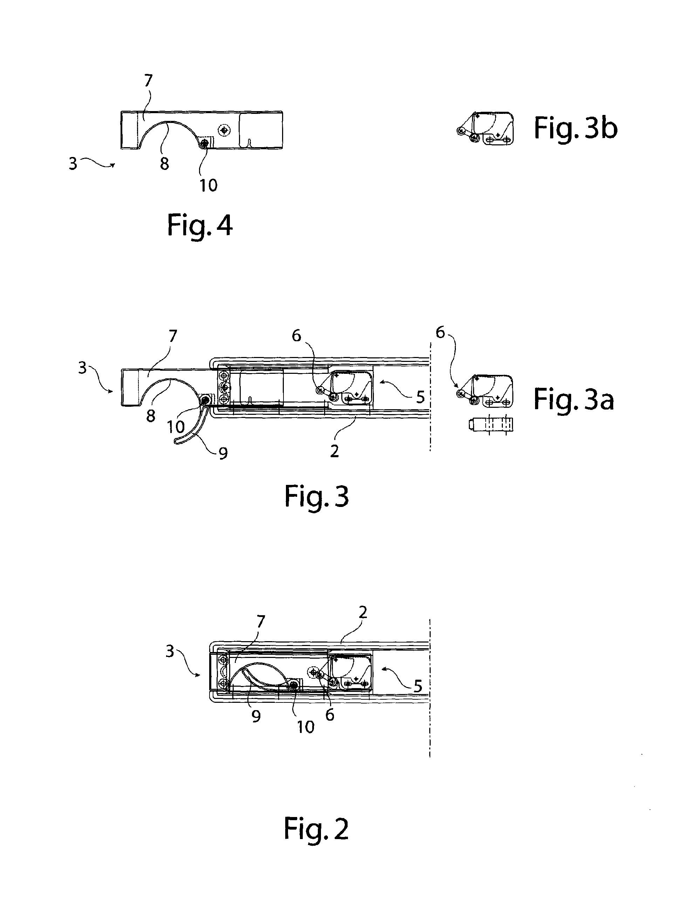

When the glass-holder 3 is extracted, finger 9 opens, always rotating about the pin 10, until reaching the position of figure 3, so as to allow the support of a glass.

As it can be clearly understood from the above specification, the solution suggested according to the present invention allows to solve all the above mentioned drawbacks, being it possible to house a glass-holder within a very small armrest.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Extractable glass-holder for seat, particularly for seat of economy class in an aircraft, **characterised in that** said glass-holder is housed within the seat armrest, and is extractable from the same, an extraction mechanism of the glass-holder from the same armrest being provided, said glass-holder being comprised of a rigid arm, longitudinally movable with respect to the armrest, in such a way to be able to take a retracted position and an extracted use position, and of a movable arm, or finger, pivoted on said rigid arm, in such a way to take a closed position when said glass-holder is in the retracted position within the armrest, and an open position, when said glass-holder is in the extracted position, said rigid and movable arms having, in the use configuration, a shape such to allow to support the glass.

2. Extractable glass-holder for seat according to claim 1, **characterised in that** said extraction mechanism provides a thrusting element for the extraction of the rigid arm of the glass-holder.

3. Extractable glass-holder for seat according to one of the preceding claims, **characterised in that** said rigid arm has an inner shaped part to conform with the shape of the glass to be supported.

4. Extractable glass-holder for seat according to one of the preceding claims, **characterised in that** said movable arm, or finger, has a curved shape, corresponding to the outer shape of the glass.

5. Extractable glass-holder for seat according to one of the preceding claims, **characterised in that** a glass-holder protection door is provided on said armrest, at the front of the glass-holder.

6. Extractable glass-holder for seat, particularly for seat of economy class in an aircraft according to each one of the preceding claims, substantially as illustrated and described.
